# EUROPÄISCHE PATENTANMELDUNG

(11) **EP 1 415 898 A2**
(43) Veröffentlichungstag der Anmeldung: **06.05.2004**
(21) Anmeldenummer: 03024302.6
(22) Anmeldetag: 24.10.2003
(51) Int. Cl.: B62D 29/04, B62D 27/02

(54) **Flächiges Karrosseriebauteil**

(30) Priorität: 02.11.2002 DE 10250979
(71) Anmelder: ArvinMeritor GmbH, 63128 Dietzenbach (DE)
(72) Erfinder: Grimm, Rainer, Dipl.-Ing., 60599 Frankfurt (DE); Mondello, Carmello, 61476 Kronberg (DE); Hopson, Charles, B., Lebanon, TN 37087 (US)
(74) Vertreter: Oppermann, Ewald, Dipl.-Ing.

(57) **Zusammenfassung**

Ein insbesondere für den Kraftfahrzeugbau bestimmtes flächiges Karosseriebauteil, das sandwichartig aus einer äußeren Schicht aus Kunststoffolie oder Aluminiumblech und einer inneren an die äußere Schicht angeschäumten Kunststoffschicht (3') gebildet ist. Die äußere Schicht kann aus mehreren Flächenbereichen (1', 2') mit unterschiedlicher Farbgebung gebildet sein. Diese können unmittelbar oder unter Zwischenlage einer Zier- oder Deckleiste (6) aneinanderstoßen und sind durch das Hinterschäumen fest miteinander verbunden. Die Zier- oder Deckleiste (6) kann hierbei die äußere Schicht mit einem stegartigen Vorsprung (7) durchgreifen, der zur Befestigung der Zier- oder Deckleiste (6) beim Anschäumen der Kunststoffschicht (3') partiell eingeschäumt ist.

## Beschreibung

Die Erfindung bezieht sich auf ein flächiges Karosseriebauteil entsprechend dem Oberbegriff des Patentanspruchs 1.

Flächige Karosseriebauteile, wie sie insbesondere im Kraftfahrzeugbau eingesetzt werden, bestehen üblicherweise aus Stahlblechen, deren Oberflächen lackiert sind, wodurch zugleich ein Korrosionsschutz erreicht wird. Wenn an derartigen Karosseriebauteilen Zierleisten u.dgl. angebracht werden, erfolgt deren Befestigung in der Regel mittels zusätzlicher Befestigungselemente, die in Blechausnehmungen eingreifen bzw. diese durchgreifen. Diese Befestigungselemente rufen Korrosionsprobleme hervor und erhöhen das Gewicht der ohnehin aufgrund der Stahlbleche schweren Karosseriebauteile in unerwünschter Weise.

Der Erfindung liegt die Aufgabe zugrunde, flächige Karosseriebauteile bereitzustellen, bei denen Korrosionsprobleme an bzw. durch Befestigungselemente von Zierleisten u.dgl. nicht auftreten und die bei hoher Festigkeit vergleichsweise leicht sind.

Die gestellte Aufgabe wird durch die kennzeichnenden Merkmale des Anspruchs 1 gelöst. Vorteilhafte Weiterbildungen gehen aus den Unteransprüchen hervor und sind nachfolgend ebenfalls beschrieben.

Die eingangs geschilderten Nachteile treten nicht auf, wenn erfindungsgemäß wie im Anspruch 1 angegeben die Karosseriebauteile aus einer mit einem formstabilen Kunststoffschaum hinterschäumten Kunststoffolie oder einem entsprechend hinterschäumten, vorzugsweise zuvor lackierten, Aluminiumblech gebildet sind und etwaige Zier- und/oder Deckleisten mittels die Kunststoffolie bzw. das Aluminiumblech durchgreifender Vorsprünge, die beim Schäumvorgang formschlüssig umschäumt werden, befestigt sind. Hierbei entstehen weder die erwähnten Korrosionsprobleme noch sind getrennte, gewichtserhöhende Befestigungselemente erforderlich. Insgesamt ist das vorgeschlagene sandwichartige Karosseriebauteil bei hoher Belastbarkeit auch vergleichsweise leicht.

Das hinterschäumte Karosseriebauteil muß in Weiterführung des Erfindungsgedankens nicht unter Verwendung eines einzigen Folienteils oder eines einstückigen Aluminiumblechs gebildet sein. So können entsprechend Anspruch 2 mehrere, beispielsweise zwei, die äußere Schicht bildende Flächenbereiche entlang einer Stoßlinie zusammengelegt und durch gemeinsames Hinterschäumen in einer entsprechenden Schäumform mit einem formbeständigen Kunststoff, z.B. auf PU-Basis, unter Bildung einer inneren Schaumkunststoffschicht zu einem einteiligen Karosseriebauteil unter gleichzeitiger Einschäumbefestigung einer Zier- und/oder Deckleiste vereinigt sein.

Um ein Durchtreten von Schaumkunststoff beim Schäumvorgang in der Form durch die Stoßstelle hindurch nach außen völlig auszuschließen, kann entsprechend Anspruch 3 auf Abkantungen der aneinanderstoßenden Flächenbereiche ein etwa U-förmiges Dichtprofil aufgesetzt sein, welches mit eingeschäumt wird.

Die Stoßstelle zwischen zwei Flächenbereichen der äußeren Schicht kann, wie im Anspruch 4 angegeben, vorteilhaft dazu verwendet werden, einen stegartigen Vorsprung einer Zierund/oder Dichtleiste abdichtend aufzunehmen, der beim Anschäumen der inneren Schicht zur Befestigung der Zier- und/oder Dichtleiste partiell mit eingeschäumt wird. Hierdurch wird zugleich die Stoßstelle nach außen abgedeckt, d.h. ist von außen nicht sichtbar. Der stegartige Vorsprung kann entsprechend Anspruch 5 zur besseren Verankerung im Schaumkunststoff mit einer geeigneten Oberflächenanrauhung oder -profilierung versehen sein.

Wird zur Bildung der äußeren Schicht eine Kunststoffolie verwendet, kann diese zur Vermeidung von Lackierarbeiten aus einem in der Masse durchgefärbten Kunststoff gebildet sein, wie das im Anspruch 6 angegeben ist.

Kommt dagegen Aluminiumblech zur Herstellung der äußeren Schicht zur Anwendung, kann dieses zweckmäßig vor dem Anschäumen der inneren Kunststoffschicht in der gewünschten Farbe wie im Anspruch 7 angegeben beschichtet werden.

Die Verwendung mehrerer verschiedener Flächenbereiche zur Bildung der äußeren Schicht ermöglicht vorteilhaft und unabhängig davon, ob die Flächenbereiche aus Kunststoffolie oder Aluminiumblech bestehen, daß die verschiedenen Flächenbereiche der äußeren Schicht unterschiedliche Farben aufweisen, wie im Anspruch 8 angegeben ist. Auf diese Weise können mehrfarbige Karosseriebauteile bereitgestellt werden, wobei an den Stoßstellen zwischen unterschiedlichen Farbbereichen Zierleisten od.dgl. durch Einschäumen befestigt sein können, welche die Ränder der unterschiedlichen Farbbereiche überlappend abdecken. Auf diese Weise wird von außen nicht sichtbar, daß das Karosseriebauteil eine Außenschicht besitzt, die ursprünglich aus zwei Flächenbereichen zusammengesetzt ist.

Nachfolgend werden drei Ausführungsbeispiele eines erfindungsgemäß ausgebildeten flächigen Karosseriebauteils anhand von skizzenhaften Zeichnungen näher beschrieben. Es zeigen:
- Fig. 1: einen abgebrochenen Schnitt durch die Außenhaut einer Fahrzeugtür, bei welcher zwei unterschiedliche Kunststoffolien durch Hinterschäumen vereinigt sind,
- Fig. 1a: einen abgebrochenen Schnitt durch den Folienstoß gemäß Fig. 1, jedoch mit aufgesetztem Abdichtprofil,
- Fig. 2: einen abgebrochenen Schnitt durch die Außenhaut einer Fahrzeugtür mit einer beim Hinterschäumen befestigten Zier- oder Abdeckleiste und
- Fig. 3: einen der Fig. 1 ähnlichen abgebrochenen Schnitt, jedoch mit einer entsprechend Fig. 2 befestigten Zier- oder Abdeckleiste.

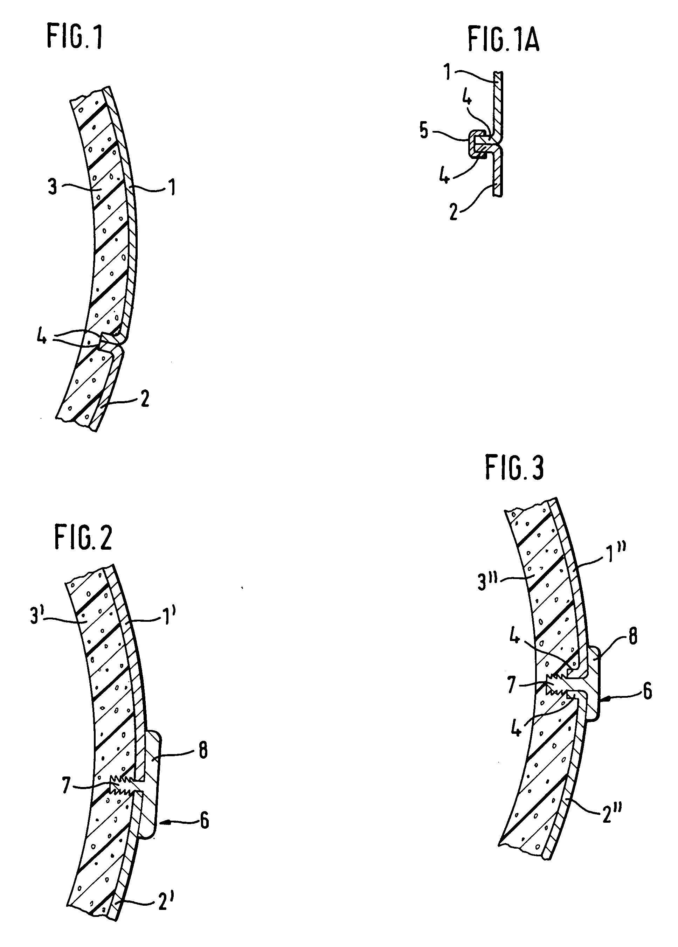

Das Karosseriebauteil gemäß Fig. 1 ist aus zwei Flächenbereichen 1 und 2 aus geeigneter Kunststoffolie, die vorzugsweise in der Masse gefärbt und daher nicht zu beschichten ist, zusammengesetzt, die gemeinsam mittels einer rückwärtigen PU-Schaumschicht 3 hinterschäumt sind. An der Stoßstelle der Flächenbereiche 1 und 2 sind nach innen gerichtete Abkantungen 4 vorgesehen, die spaltlos zusammengelegt sind. Um ein Durchtreten von Schaumkunststoff beim Schäumvorgang in der Form durch die Stoßstelle hindurch nach außen völlig auszuschließen, kann auf die Abkantungen 4 ein im Querschnitt etwa U-förmiges Dichtprofil 5 aufgesetzt sein, wie aus Fig. 1a hervorgeht.

Bei dem Ausführungsbeispiel gemäß Fig. 2 übernimmt eine im Querschnitt etwa T-förmige Zier- oder Deckleiste 6 aus Metall oder Kunststoff die Abdichtung zwischen den beiden Flächenbereichen 1' und 2'. Der Steg 7 der Zier- oder Deckleiste 6 trennt die beiden Flächenbereiche 1', 2' voneinander und steht nach innen über, so daß er partiell eingeschäumt ist, wodurch die Zier- oder Deckleiste 6 an dem Karosseriebauteil befestigt ist. Der Flansch 8 der Leiste 6 liegt beiden Flächenbereichen 1', 2' von außen an. Zur besseren Verankerung des Stegs 7 in der Schaumschicht 3' kann der Steg in seinem umschäumten Bereich mit einer Oberflächenanrauhung oder -profilierung in Form von Riefen od.dgl. versehen sein.

Das in Fig. 3 dargestellte Ausführungsbeispiel ist eine Kombination der in den Fig. 1 und 2 gezeigten Ausführungsbeispiele. Die Abkantungen 4 der Flächenbereiche 1" und 2'' der äußeren Schicht stoßen hierbei nicht unmittelbar aneinander, sondern liegen dem Steg 7 der Zier- oder Deckleiste 6 dicht an. Der Steg 7 steht nach innen über die Abkantungen 4 über und ist auf die schon beschriebene Weise zur Befestigung der Leiste 6 partiell eingeschäumt.

Die erfindungsgemäße Struktur des Karosseriebauteils erlaubt für die Flächenbereiche 1, 2 bzw. 1', 2', bzw. 1", 2" eine unterschiedliche Farbgebung. Im Falle der Verwendung von Kunststoffolie können diese Flächenbereiche unterschiedlich in der Masse gefärbt sein, so daß eine nachträgliche Lackierung entfällt. Falls Aluminiumbleche zum Einsatz kommen, können diese zuvor unterschiedlich lackiert oder beschichtet werden, bevor sie zu dem erfindungsgemäßen Karosseriebauteil durch Hinterschäumen, ggf. unter Einlegung einer Zier- oder Deckleiste, vereinigt werden.

Vorgeschlagen wird ein insbesondere für den Kraftfahrzeugbau bestimmtes flächiges Karosseriebauteil, das sandwichartig aus einer äußeren Schicht aus Kunststoffolie oder Aluminiumblech und einer inneren an die äußere Schicht angeschäumten Kunststoffschicht gebildet ist. Die äußere Schicht kann aus mehreren Flächenbereichen mit unterschiedlicher Farbgebung gebildet sein. Diese können unmittelbar oder unter Zwischenlage einer Zier- oder Deckleiste aneinanderstoßen und sind durch das Hinterschäumen fest miteinander verbunden. Die Zier- oder Deckleiste kann hierbei die äußere Schicht mit einem stegartigen Vorsprung durchgreifen, der zur Befestigung der Zier- oder Deckleiste beim Anschäumen der Kunststoffschicht partiell eingeschäumt ist.

### Bezugszeichenliste

- 1, 2, 1', 2': Flächenbereiche
- 3, 3': Schaumschicht
- 4: Abkantungen
- 5: Dichtprofil
- 6: Zier- oder Deckleiste
- 7: Steg
- 8: Flansch

## Patentansprüche

1. Flächiges Karosseriebauteil, insbesondere für Kraftfahrzeugkarosserien, mit außen anzubringenden Zier- und/oder Deckleisten (6), **gekennzeichnet durch** einen sandwichartigen Aufbau, bestehend aus einer äußeren Schicht aus Kunststoffolie oder Aluminiumblech und einer inneren, an die äußere Schicht angeschäumten Kunststoffschicht (3, 3'), in welcher die äußere Schicht durchgreifende Vorsprünge od.dgl. (7) der Zier- und/oder Deckleisten (6) **durch** formschlüssiges Umschäumen beim Anschäumen befestigt sind.

2. Karosseriebauteil nach Anspruch 1, **dadurch gekennzeichnet, daß** die äußere Schicht aus mehreren Flächenbereichen (1, 2) gebildet ist, die unmittelbar aneinanderstoßen und durch das Anschäumen der inneren Kunststoffschicht (3) fest miteinander verbunden sind.

3. Karosseriebauteil nach Anspruch 2, **dadurch gekennzeichnet, daß** die Flächenbereiche (1, 2) mit gleichgerichteten Abkantungen (4) aneinanderstoßen, auf die von innen ein etwa U-förmiges Dichtprofil (5) aufgesetzt und beim Anschäumen der inneren Kunststoffschicht (3) eingeschäumt ist.

4. Karosseriebauteil nach Anspruch 1, **dadurch gekennzeichnet, daß** die äußere Schicht aus mehreren Flächenbereichen (1', 2') gebildet ist, die jeweils paarweise dicht an einem stegartigen Vorsprung (7) einer Zier- und/oder Deckleiste (6) anstoßen, der mit einem nach innen überstehenden Bereich zur Befestigung der Zier- und/oder Deckleiste (6) beim Anschäumen der inneren Kunststoffschicht (3') eingeschäumt ist.

5. Karosseriebauteil nach Anspruch 4, **dadurch gekennzeichnet, daß** der stegartige Vorsprung (7) in seinem eingeschäumten Bereich mit einer Oberflächenanrauhung in Form von Riefen od. dgl. versehen ist.

6. Karosseriebauteil nach einem der Ansprüche 1 bis 5, **dadurch gekennzeichnet, daß** die Kunststoffolie der äußeren Schicht in der Masse durchgefärbt ist.

7. Karosseriebauteil nach einem der Ansprüche 1 bis 5, **dadurch gekennzeichnet, daß** das Aluminiumblech der äußeren Schicht vor dem Anschäumen der inneren Kunststoffschicht (3, 3') beschichtet ist.

8. Karosseriebauteil nach einem der Ansprüche 1 bis 7, **dadurch gekennzeichnet, daß** die verschiedenen Flächenbereiche (1, 2, 1', 2') der äußeren Schicht unterschiedliche Farben aufweisen.
